# EUROPÄISCHE PATENTSCHRIFT

(11) **EP 2 539 384 B1**
(45) Veröffentlichungstag und Bekanntmachung des Hinweises auf die Patenterteilung: **18.06.2014**
(21) Anmeldenummer: 11705521.0
(22) Anmeldetag: 22.02.2011
(51) Int. Cl.: C08G 18/24, C08G 18/66

(54) **KATALYSIERTE GRANULATTEMPERUNG FÜR THERMOPLASTISCHE POLYURETHANE**
CATALYZED GRANULATE TEMPERING FOR THERMOPLASTIC POLYURETHANES
THERMORÉGULATION CATALYSÉE DE GRANULÉS POUR POLYURÉTHANNE THERMOPLASTIQUE

(30) Priorität: 26.02.2010 EP 10154848
(43) Veröffentlichungstag der Anmeldung: 02.01.2013
(73) Patentinhaber: BASF SE, 67056 Ludwigshafen (DE)
(72) Erfinder: KAMINSKY, Torben, 49448 Lemförde (DE); KEMPFERT, Dirk, 32351 Stemwede-Dielingen (DE)
(86) Internationale Anmeldenummer: PCT/EP2011/052584
(87) Internationale Veröffentlichungsnummer: WO 2011/104224

(56) Entgegenhaltungen:
- EP-A1- 0 922 552
- EP-A1- 1 031 588
- DE-A1- 3 614 839
- DE-A1- 3 709 631

## Beschreibung

Gegenstand der vorliegenden Erfindung ist ein Verfahren zur Herstellung von thermoplastischen Polyisocyanat Polyadditonsprodukten.

Thermoplastische Polyisocyanat Polyadditionsprodukte, insbesondere thermoplastisches Polyurethan (TPU) sind seit längerem bekannt. Aufgrund ihrer ausgezeichneten physikalisch-mechanischen sowie guten chemischen Eigenschaften, die gezielt durch geeignete Wahl der Einsatzkomponenten, deren stöchiometrischen Verhältnisse sowie die Herstellungsbedingungen in einem weiten Bereich eingestellt werden können, haben sie in den zurückliegenden Jahren in steigendem Maße ihren Platz in der Reihe der hochwertigen verarbeitbaren Kunststoffelastomere ausgebaut.

Die produktionstechnisch dominierenden kontinuierlichen Herstellungsverfahren sind das Band- oder das Reaktionsextruderverfahren, mit denen üblicherweise ein Granulat hergestellt wird, das dann in der Regel nach den beiden bekanntesten thermoplastischen Verarbeitungstechniken Spritzguss- oder Extrusionsverfahren, weiterverarbeitet wird.

TPU-Granulat wird nach dem Syntheseschritt in der Regel für eine gewisse Zeit gelagert um die Polymerisation abzuschließen und einen Molekulargewichtsaufbau zu erreichen. Dieser Vorgang wird durch erhöhte Temperatur (z.B. 60 °C bis 80 °C) beschleunigt, was dem Fachmann auch als Temperung geläufig ist. Die Temperung wird häufig in einem Silo durchgeführt. Produkte mit besonders hohen Qualitätsanforderungen, insbesondere auch weiche TPU werden nach der Temperung üblicherweise bei Umgebungstemperatur vor der weiteren Verarbeitung weiter gereift.

Die Temperung benötigt sehr viel Energie, die Lagerung bei Umgebungstemperatur benötigt sehr viel Raum ist langwierig und bindet Kapital.

Insbesondere bei weichen TPU kommt es hierbei leicht zum Verkleben des Granulates, was dann die Weiterverarbeitung erheblich erschwert.

In DE 2149836 ist zum Beispiel ein Temperverfahren zur Herstellung von Polyurethan, welches keine freien Isocyanatgruppen enthält, beschrieben. Weitere Beispiele zur Vervollständigung des Umsatzes durch Temperung der TPU sind EP1031588 (Verfahren 5) und EP 1366100 (Beispiel 1) zu entnehmen.

Die DD 300 298 A7 nennt ein Verfahren bei dem nach der Extrusion in ein Wasserbad ein Katalysator gegeben wird. Es können jedoch nur Katalysatoren eingesetzt werden, die nicht durch Wasser deaktiviert werden. In DD 300 298 A7 wird unter anderem die Zugabe von Titantetrabutylat zum Prozesswasser erwähnt. Nach Bsp. 24 in

WO 2002 044 243 A1 wird Titantetrabutylat jedoch bei Kontakt mit Luftfeuchtigkeit innerhalb von 5 h nahezu vollständig durch Hydrolyse deaktiviert und kann daher nicht wirtschaftlich im Prozesswasser eingesetzt werden.

Ein weiterer Nachteil dieses Verfahrens ist, dass auf diese Weise nur wasserlösliche Katalysatoren angewendet werden können. So ist zum Beispiel der Katalysator Zinndioctoat, der unter dem Handelsnamen Kosmos 29 vertrieben wird, wird laut technischem Datenblatt der Firma Degussa Goldschmidt Polyurethan Additives in Wasser unlöslich.

Insgesamt kann daher nur ein begrenzter Anteil vorteilhafter Katalysatoren zur Nachbehandlung eines Polyisocyanat Polyadditionsproduktes eingesetzt werden. Nachteilig im Stand der Technik ist zudem, dass sich nach der Granulierung ein Tropfen auf der Unterseite des Granulatkornes bildet, das dort nach Verdampfen des Wassers zu einer höheren Konzentration des Katalysators und damit zu einer ungleichmäßigen Nachhärtung des Granulates führt.

Daher stellte sich die Aufgabe die Produktion von thermoplastischem Polyisocyanat Polyadditionsprodukt-Granulat so zu verbessern, dass durch Katalyse die Temperung bei gleicher Temperatur beschleunigt oder bei geringerer Temperatur durchgeführt werden kann.

Insbesondere bei weichen TPU-Materialien, insbesondere solche mit einer Shore-A Härte von weniger als 80, soll durch eine beschleunigte Temperung bei Raumtemperatur das Verkleben des Granulates eingedämmt werden.

Überraschenderweise wurde diese Aufgabe gelöst indem zur Herstellung von thermoplastischem Polyisocyanat Polyadditionsprodukt, basierend auf (i) Polyisocyanat und (ii) mit Polyisocyanat reaktiven Verbindungen, gegebenenfalls unter Verwendung von (iii) Kettenverlängerer, einem erstem Katalysator (iv) und/oder Zusatzstoffen (v) die in einem ersten Schritt miteinander reagieren, in einem zweiten Schritt ein zweiter Katalysator (vi) aufgebracht wird, der die Reaktion zwischen dem Polyisocyanat (i) und der mit Polyisocyanat reaktiven Verbindung (ii) beschleunigt, wobei der zweite Katalysator (vi) vor dem Aufbringen verdampft und/oder vernebelt wird. Der zweite Katalysator (vi) wird auch als Polymerisationskatalysator angesprochen.

Das erfindungsgemäße Verfahren eröffnet erstmalig die Möglichkeit eine deutlich breiteren Palette an Polymerisationskatalystoren zur Nachbehandlung von Polyisocyanat Polyadditionsprodukten einzusetzen und so deren Vorteile erstmals für die Nachbehandlung von Polyisocyanat Polyadditionsprodukt zu nutzen. Insbesondere durch die Ausführungsformen, in denen nur wenig oder kein Lösungsmittel und/oder Weichmacher benutz wird, wird gegenüber dem Aufbringen des Katalysators in Lösungsmitteln sehr viel Energie eingespart, da das Trocknen schneller ist und die Lösungsmittelentfernung fast vollständig in bevorzugten Ausführungsformen vollständig, wegfällt, was mit enormen Einsparungen bei den Betriebskosten verbunden ist.

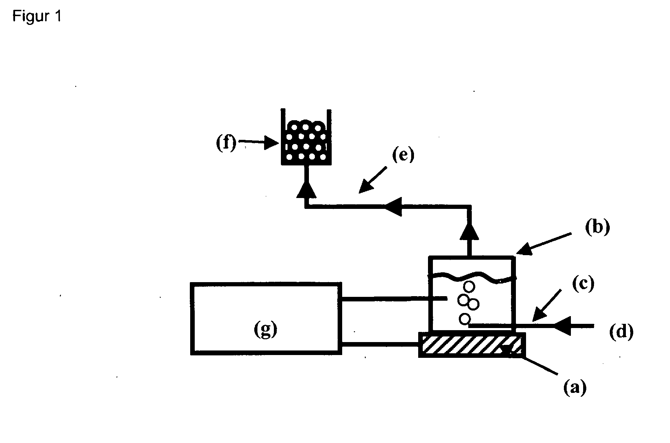

Figur 1 zeigt schematisch eine bevorzugte Vorrichtung für eine bevorzugten Ausführungsform bei der der zweiter Katalysator (vi) mit einer Heizplatte (a), die an eine Temperaturregeleinheit (g) angeschlossen ist, in einem Gefäß (b) erhitzt wird, in diese über eine Leitung (c) ein Trägergas (d), bevorzugt Stickstoff, eingeleitet wird und das Trägergas/Katalysator-Gemisch über eine zweite Leitung (e) auf Polyisocyanat Polyadditionsprodukt in einem Gefäß oder Raum (f) aufgebracht wird.

Vorliegend wird als Polyisocyanat (i) sowohl eine einzige Substanz als auch eine Mischung von Substanzen verstanden, die bevorzugt aus der nachfolgenden Aufzählung ausgewählt ist: Organische Isocyanate (a) sind aliphatische, cycloaliphatische, araliphatische und/oder aromatische Isocyanate, weiter bevorzugt Diioscyanate, bevorzugt Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatoethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat, (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, bevorzugt 2,2'-, 2,4'- und/oder 4,4'-Diphenylmethandiisocyanat (MDI) und/oder Hexamethylendiisocyanat (HDI). Besonders bevorzugt ist ein Gemisch aus 4,4'-Diphenylethandiisocyanat mit mindestens 97 % 4,4'-Isomerenanteil, 1,6-Hexamethyleniisocyanat, Dicyclohexylmethandiisocyanat und Isophorondiisocyanat.

Als gegenüber Isocyanat reaktive Verbindung (ii) wird eine im Mittel mit mindestens 1,8 und höchstens 3,0 zerewitinoffaktiven Wasserstoffatomen, im Wesentlichen linearen isocyanatreaktiven Substanz oder eine Mischung verschiedener Substanzen verstanden, wobei die Mischung die genannten Anforderung erfüllt, Übliche isocyanatreaktive Gruppen sind insbesondere Hydroxylgruppen, daneben Aminogruppen, Mercaptogruppen oder Carbonsäuregruppen. Bevorzugt handelt es sich hierbei um Polyesterole, Polyetherole oder Polycarbonatdiole.

Diese langkettigen Verbindungen mit zerewitinoffaktiven Wasserstoffatomen haben ein zahlenmittleres Molekulargewicht im Bereich von 0,45 kg/mol bis 5 kg/Mol und werden mit einem Stoffmengenanteil von 1 bis 80 Äquivalent-Mol%, bezogen auf den Isocyanatgruppengehalt des Polyisocyanats eingesetzt, wobei die Grundlage der Berechnung das zahlenmittlere Molekulargewicht ist.

Als gegenüber Isocyanaten reaktive Verbindungen (ii) werden bevorzugt Polyhydroxylverbindungen, auch als Polyole bezeichnet, mit zahlenmittleren Molekulargewichten von 0,501 kg/Mol bis 8 kg/Mol, bevorzugt 0,7 kg/Mol bis 6 kg/Mol, insbesondere 0,8 kg/Mol bis 4 kg/Mol, und bevorzugt einer mittleren Funktionalität von 1,8 bis 2,6, bevorzugt 1,9 bis 2,2, insbesondere 2, eingesetzt. In einer bevorzugten Ausführungsform wird nur ein Polyol verwendet, in einer anderen bevorzugten Ausführungsform werden Mischungen von Polyolen eingesetzt, die in der Mischung den o.g. Anforderungen entsprechen. Unter dem Ausdruck "Funktionalität" ist insbesondere die Anzahl an aktiven Wasserstoffatomen, insbesondere Hydroxylgruppen, zu verstehen. Bevorzugt setzt man als Poylol Polyesterole und/oder Polyetherole und/oder Polycarbonatdiole ein, besonders bevorzugt Polyesterdiole, bevorzugt Polycaprolacton, und/oder Polyetherpolyole, bevorzugt Polyetherdiole, weiter bevorzugt solche auf der Basis von Ethylenoxid, Propylenoxid und/oder Butylenoxid, bevorzugt Polypropylenglykol, insbesondere Polyetherole. Besonders bevorzugt werden als Polyol Verbindungen eingesetzt, die zum Aufbau einer Weichphase im TPU geeignet sind, bevorzugt Copolyester basierend auf Adipinsäure und Gemischen aus Ethandiol-1.2 und Butandiol-1.4, Copolyester basierend auf Adipinsäure und Gemischen aus Butandiol-1.4 und Hexandiol-1.6, Polyester basierend auf Adipinsäure und 3-Methyl-Pentandiol-1.5 und/oder Polytetramethylenglykol (Polytetrahydrofuran, PTHF), besonders bevorzugt Copolyester basierend auf Adipinsäure und Gemischen aus Ethandiol-1.2 und Butandiol-1.4 und/oder Polytetramethylenglykol (PTHF).

Ein dritter Ausgangsstoff für die Herstellung von Polyisocyanat Polyadditionsprodukten sind Kettenverlängerer (iii) mit im Mittel mindestens 1,8 und höchstens 3,0 zerewitinoffaktiven Wasserstoffatomen pro Molekül, einem zahlenmittleren Molekulargewicht von 0,006 kg/Mol bis 0,4 kg/Mol und einem Anteil von 12 bis 99 Äquivalent-%, bezogen auf den Isocyanatgruppengehalt des Polyisocyanats. In einer Ausführungsform wird ein Kettenverlängerer eingesetzt, in einer anderen Ausführungsform wird ein Gemisch von Kettenverlängerern eingesetzt, die den vorher genannten Anforderungen entsprechen.

Als Kettenverlängerungsmittel (iii) werden allgemein bekannte aliphatische, araliphatische, aromatische und/oder cycloaliphatische Verbindungen mit einem zahlenmittleren Molekulargewicht von 0,05 kg/mol bis 0,499 kg/mol, ganz besonders bevorzugt mit 2-funktionelle Verbindungen, eingesetzt, bevorzugt Diamine und/oder Alkandiole mit 2 bis 10 C-Atomen im Alkylenrest, weiter bevorzugt Ethandiol, Propandiol, Butandiol-1,4, Hexandiol-1,6 und 1,4-Di-(β-hydroxyethyl)-hydrochinon insbesondere Ethandiol, Butandiol-1,4 und Hexandiol-1,6.

Eine weiter bevorzugte Gruppe von Kettenverlängerern sind aliphatische Diamine, insbesondere Ethylendiamin oder Propylendiamin oder Mischungen enthaltend Ethylendiamin und Propylendiamin.

Bevorzugt wird zusätzlich mindestens ein Katalysator (iv) eingesetzt und/oder übliche Hilfs- und/oder Zusatzstoffe.

Bevorzugte Katalysatoren (iv) sind organische Metallverbindungen wie Titanverbindungen, bevorzugt Titansäureester, Eisenverbindungen, bevorzugt Eisenacetylacetonat, Zinnverbindungen, bevorzugt Zinndiacetat, Zinndioctoat, Zinndilaurat, Dibutylzinndiacetat und Dibutylzinndilaurat, besonders bevorzugt ist Zinndioctoat.

Andere bevorzugte erste Katalysatoren (iv), bei der Herstellung von thermoplastischen Polyisocyanat-Polyadditionsprodukten sind Amine wie Tetramethylethylendiamin, N-Methylmorpholin, Diethylbenzylamin, Triethylamin, Dimethylcyclohexyl-amin, Diazabicyclooctan, N,N'-Dimethylpiperazin, N-Methyl,N'-(4-N-Dimethylamino-) Butylpiperazin, N,N,N',N",N"-Pentamethyldiethylendiamin. Weiterhin bevorzugte Katalysatoren sind Amidine, weiter bevorzugt 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, sowie Tetraalkylammoniumhydroxide, bevorzugt Tetramethylammoniumhydroxid, Alkalihydroxide, bevorzugt Natriumhydroxid, und Alkalialkoholate, bevorzugt Natriummethylat und Kaliumisopropylat, sowie Alkalisalze von langkettigen Fettsäuren mit 10 bis 20 C-Atomen und gegebenenfalls seitenständigen OH-Gruppen.

In einigen bevorzugten Ausführungsformen wird nur ein Katalysator eingesetzt, in anderen bevorzugten Ausführungsformen werden mehrere verschiedene Katalysatoren nebeneinander eingesetzt, bevorzugt ist die Verwendung organischer Metallverbindungen.

Übliche Hilfs- und Zusatzstoffe sind beispielsweise Weichmacher, Gleitmittel, Molekularkettenregler, Flammschutzmittel, anorganische-/organische Füllstoffe, Farbstoffe, Pigmente und Stabilisatoren gegen Hydrolyse, Licht und thermisch bedingten Abbau.

Als Hydrolyseschutzmittel werden bevorzugt oligomere und/oder polymere aliphatische oder aromatische Carbodiimide verwendet. Um die erfindungsgemäßen TPU gegen Alterung zu stabilisieren, können dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 [1], S. 98-136.

Ist das erfindungsgemäße TPU während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S. 98-107 und S 116-121.

Die Einsatzmengen des Polyisocyanats (i), der mit Isocyanat reaktiven Verbindung (ii) und, sofern vorhanden, des Kettenverlängerers (iii) werden bevorzugt so aufeinander abgestimmt, dass das molare NCO zu OH-Verhältnis aus dem Polyisocyanat zur Summe der mit Isocyanat reaktiven Verbindung (ii), Kettenverlängerer (ii) und gegebenenfalls Hilfs- und/oder Zusatzstoffen zwischen 0,9 : 1 bis 1,2 : 1 liegt.

Bevorzugt werden die themoplastischen Polyisocyant Polyadditionsprodukte über das Band- oder das Reaktionsextruderverfahren hergestellt und zu Granulat verarbeitet, wobei die Granulatkörner bevorzugt rund, eckig, oder zylinderförmig sind.

In dem erfindungsgemäßen Verfahren zur Herstellung von thermoplastischem Polyisocyanat Polyadditionsprodukt, bevorzugt thermoplastischem Polyurethan (TPU), basierend auf (i) Polyisocyanat und mit Polyisocyanat reaktiven Verbindungen (ii), gegebenenfalls unter Verwendung von Kettenverlängerer (iii), erstem Katalysator (iv) und/oder Zusatzstoffen (v) auf das so hergestellte Polyisocyanat Polyadditionsprodukt, das bevorzugt als Granulat vorliegt, wird ein zweiter Katalysator (vi) aufgebracht, der die Reaktion zwischen dem Polyisocyanat (i) und den mit Polyisocyanat reaktiven Verbindungen (ii) beschleunigt. Bevorzugt liegt dieses Produkt in Form eines Granulates vor.

In einem bevorzugten Verfahren handelt es sich bei dem zweiten aufgetragenen Katalysator (vi) um mindestens ein Amine, bevorzugt Triethylamin, Dimethylcyclohexylamin, N-Methylmorpholin, N,N'-dimethylpiperazin, Diazabicyclo-(2,2,2)-octan.

Andere bevorzugte zweite Katalysatoren (vi) sind Amine wie Tetramethylethylendiamin, N-Methylmorpholin, Diethylbenzylamin, Triethylamin, Dimethylcyclohexyl-amin, Diazabicyclooctan, N,N'-Dimethylpiperazin, N-Methyl,N'-(4-N-Dimethylamino-) Butylpiperazin, N,N,N',N",N"-Pentamethyldiethylendiamin. Weiterhin bevorzugte Katalysatoren sind Amidine, weiter bevorzugt 2,3-Dimethyl-3,4,5,6-tetrahydropyrimidin, Tris-(dialkylaminoalkyl)-s-hexahydrotriazine, insbesondere Tris-(N,N-dimethylaminopropyl)-shexahydrotriazin, sowie Tetraalkylammoniumhydroxide, bevorzugt Tetramethylammoniumhydroxid, Alkalihydroxide, bevorzugt Natriumhydroxid, und Alkalialkoholate, bevorzugt Natriummethylat und Kaliumisopropylat, sowie Alkalisalze von langkettigen Fettsäuren mit 10 bis 20 C-Atomen und gegebenenfalls seitenständigen OH-Gruppen.,

In einer anderen bevorzugten Ausführungsform umfasst der zweite Katalysator (vi) mindestens eine organische Metallverbindung, auch als metallorganische Verbindung angesprochen.

Bevorzugt wird als zweiter Katalysator (vi) ein Katalysator eine organische Metallverbindung auf der Basis von Titan, Eisen und/oder Zinn eingesetzt. Besonders bevorzugt handelt es sich bei der Metallverbindung um Titansäureester und/oder Zinnverbindungen. Bevorzugte sind Zinnverbindungen, weiter bevorzugt Zinnacetat, Zinndioctoat, Zinndilaurat oder Zinndialkylsalze aliphatischer Carbonsäuren. Besonders bevorzugt ist Zinndioctoat sowie Zinkdialkylsalze wie Dibutylzinndiacetat und/oder Dibutylzinndilaurat.

In einer bevorzugten Ausführungsform sind erster Katalysator (iv) und zweiter Katalysator (vi), der bevorzugt außen auf das Granulat aufgebracht wird, identisch.

Der Auftrag des zweiten Katalysators (vi) erfolgt bevorzugt durch dem Fachmann bekannte Verfahren zum Auftrag auf eine Oberfläche. Bevorzugte Verfahren sind Sprühen oder Tauchen.

Bevorzugt wird der zweite Katalysator (vi) durch Versprühen auf das Polyisocyanat Polyadditionsprodukt aufgebracht. Dabei kann jedes übliche Sprühverfahren verwendet werden.

Die für ein Sprühverfahren verwendeten Sprühanlagen bestehen im Wesentlichen aus einem Sprühkopf, einer Sprühmittelleitung und einer Sprühmittelquelle. Der Sprühkopf ist dabei meist am vorderen Ende eines Sprühmaschinenarms montiert, wobei die Sprühmittelleitung derart ausgeführt ist, dass sie den Bewegungen des Sprühmaschinenarms folgen kann. In anderen bevorzugten Ausführungsformen ist der Sprühkopf fest.

Der Sprühkopf kann auch als Sprühmittelpistole ausgelegt sein und manuell, z. B. durch eine Person, bewegt werden.

Die Sprühmittelquelle ist bevorzugt als mit einer Sprühmittelaufbereitungsvorrichtung verbundene Sprühmittelumlaufleitung ausgeführt. In der Sprühmittelaufbereitungsvorrichtung werden die Sprühmittel, jeweils für eine Sprühmittelumlaufleitung, für die Anwendung aufbereitet und in konstanter Anwendungsqualität gehalten und in die Sprühmittelumlaufleitung gepumpt.

In einer anderen bevorzugten Ausführungsform wird ein Lösungsmittel und/oder Weichmacher, in dem der Katalysator (vi) gelöst oder suspendiert vorliegt, direkt auf das thermoplastische Polyisocyanat Polyadditionsprodukt, bevorzugt als Granulat vorliegend, aufgetragen. In einer anderen Ausführungsform wird das Lösungsmittel und/oder der Weichmacher enthaltend den Katalysator (vi) in einem Gasstrom verwirbelt und dieser Gasstrom auf thermoplastische Polyisocyanat Polyadditionsprodukt, bevorzugt als Granulat vorliegend, aufgetragen.

Das Sprühverfahren kann kontinuierlich oder batchweise erfolgen, bevorzugt ist das kontinuierliche Verfahren.

In einem bevorzugten Verfahren wird der Katalysator (vi) unmittelbar aufgebracht. Dabei wird bevorzugt ein Trägergas eingesetzt, das den fein pulverisierten oder in kleine Tröpfchen zerstäubten Katalysator auf die Granulatoberfläche aufträgt. In einem anderen bevorzugten Verfahren wird der Katalysator zunächst mit einem Lösungsmittel und/oder einem Weichmacher verdünnt, bevorzugte ist mindestens ein Lösemittel und/oder Weichmacher ausgewählt aus Aceton, Dioctyladipat, Toluol und/oder Waschbenzin, besonders bevorzugt wird Aceton verwendet.

Ein anderes bevorzugtes Verfahren zum Auftrag des Katalysators (vi) auf das thermoplastischen Polyisocyanat-Polyadditionsgranulat, das bevorzugt als Granulat vorliegt, wird durch Tauchen des thermoplastischen Polyisocyanat-Polyadditions Produktes in eine Flüssigkeit, die den Katalysator (vi) enthält, erreicht.

Das Granulat kann in Abhängigkeit der aufzutragenden Katalysatormenge einfach oder mehrfach getaucht und/oder besprüht werden, wobei derselbe oder unterschiedliche Katalysatoren aufgetragen werden. Bevorzugt wird überflüssiges Tauchmittel nach jedem Tauchvorgang entfernt.

Der Behälter, der den Katalysator (vi) enthält, wird je nach Bedarf geheizt, gekühlt oder von der Umgebungstemperatur temperiert. Die Aufbringung des Katalysators (vi) können dadurch optimiert werden.

In einer anderen bevorzugten Ausführungsform wird das Tauch- und Sprühverfahren kombiniert.

Nach einer der bevorzugten Aufbringungsformen des Katalysators wird in einer bevorzugten Ausführungsform das thermoplastische Polyisocyanat Polyadditionsprodukt getrocknet. Bevorzugt geschieht dies durch Trocknerzentrifugen, kalt- oder Warmgebläse. Eine ganz bevorzugte Form eines Katalysators (vi) ist eine in Aceton gelöste Zinnverbindung, insbesondere Zinndioctoat.

Die Mischung aus Katalysator (vi) und Lösungsmittel und/oder Weichmacher hat bevorzugt eine Viskosität von weniger als 1 Pas, weiter bevorzugt von weniger als 0,5 Pas.

In einer weiteren bevorzugten Ausführungsform wird der Katalysator (vi) in einem ersten Schritt vernebelt. In dem Fall, dass es sich um eine Festsubstanz handelt, erfolgt dies durch Zerreiben des Katalysators zu einem Pulver, bevorzugt bis zur Größe von Nanopartikeln. Das Zerreiben erfolgt durch jegliche Art von Zerkleinerungsvorrichtungen wie z. B. mechanische Mühlen, Druckluftmühlen, Ultraschall o. ä. Das so hergestellt Pulver wird in einem ersten Raum verwirbelt. Liegt der Katalysator als Flüssigkeit, ggf. zähe Flüssigkeit vor, so wird hieraus durch geeignete Maßnahmen ein Nebel erzeugt. Dies erfolgt in bevorzugten Ausführungsformen durch Verwirbeln, Versprühen. In bevorzugten Ausführungsformen wird der Katalysator vor dem Vernebeln mit einem Lösungsmittel und/oder Weichmacher angelöst. In einer bevorzugten alternativen Ausführungsform wird der Katalysator verdampft, bevorzugt erfolgt die Verdampfung durch Wärmezufuhr. Der Katalysatordampf und/oder Katalysatornebel wird auf das Polyisocyanat Polyadditionsprodukt, aufgebracht, das Pulver sedimentiert, der Dampf kondensiert.

In einer bevorzugten Ausführungsform wird der Katalysatordampf und/oder Katalysatornebel in einem ersten Raum erzeugt und anschließend in einem zweiten Raum auf das Polyisocyanat Polyadditionsprodukt aufgetragen. Der erste Raum ist bevorzugt geschlossen, jedoch mit einer geeigneten Entnahmeeinrichtung für den Katalysatornebel und/oder Dampf ausgestattet. Bevorzugt bestehen Verbindungsröhren zwischen dem ersten Raum der Dampf und/oder Nebelherstellung und dem zweiten Raum des Auftragens.

Der zweite Raum ist bevorzugt mit einer geeigneten Sprüheinrichtung ausgestattet. In einer bevorzugten Ausführungsform ist der zweite Raum so gestaltet, dass der Katalysatordampf und/oder Katalysatornebel von unten das Polyisocyanat Polyadditionsprodukt umströmt und nach oben, bevorzugt gedrosselt entweicht. Als Drossel dient jegliche Verengung des Luftraums über dem Polyisocyanat Polyadditionsprodukt, der zu einer gegenüber dem ungehinderten Vorbeiströmen verlängerten Verweildauer des Dampfes oder Nebels am Polyisocyanat Polyadditionsprodukt führt. Die Durchströmung von unten wird bevorzugt dadurch gewährleistet, dass das Polyisocyanat Polyadditionsproduktes auf einem Sieb geschichtet ist. Das Sieb kann stationär sein oder bei einem kontinuierlichen Prozess in Bewegung sein. Ein besonders bevorzugter Apparat für die Aufbringung des Katalysators ist ein Wirbelbett.

In einer weiter bevorzugten Ausführungsform wird der Katalysatordampf und/oder Katalysatornebel von dem ersten Raum in den zweiten Raum durch ein Trägergas überführt. Als Trägergas ist jedes Gas geeignet, das nicht bzw. nur für den Produktionsprozess in vernachlässigbarer Weise, mit dem Katalysator und oder Polyisocyanat Polyadditionsprodukt reagiert. Bevorzugte Trägergase sind Luft, Stickstoff und Kohlendioxid, besonders bevorzugt ist Stickstoff, das in einer bevorzugten Ausführungsform die Anforderungen an ein technisches Gas erfüllt. Insbesondere soll der Taupunkt des Gases unterhalb von -20°C, bevorzugt unterhalb von -40°C liegen.

Bevorzugt wird in dem ersten Raum in dem der Katalysator verdampft und/oder vernebelt wird mit dem Trägergas ein Überdruck von 0,001 bar bis 10 bar, bevorzugt, 0,01 bar bis 5 bar und besonders bevorzugt von 0,02 bar bis 2 bar erzeugt und auf diese Weise, der Katalysatordampf und/oder Katalysatornebel in den zweiten Raum übergetrieben. Dieses Verfahren eignet sich besonders gut für den kontinuierlichen Herstellungsprozess von Granulat. Alternativ kann das Trägergas auch bevorzugt zur Befüllung eines Gefäßes mit dem Katalysatornebel und/oder Katalysatordampf eingesetzt werden.

In einem alternativen, bevorzugten Verfahren wird der Katalysator (vi) in einem geschlossenen System verdampft und/oder vernebelt und, bevorzugt batchweise, auf das Polyisocyanat Polyadditionsprodukt aufgebracht. Das geschlossene System bildet den Vorteil, dass weniger Katalysator verloren geht.

Um das Verdampfen des Katalysators (vi) zu erleichtern oder überhaupt zu ermöglichen, wird bevorzugt in einem geschlossenen System ein Unterdruck angelegt, der das Verdampfen des Katalysators (vi). Der Unterdruck wird in einer bevorzugten Ausführungsform mit Wärmezufuhr auf den Katalysator verknüpft. Die Wärmezufuhr kann mit allen Wärmegeräten erfolgen. Beispiele hierfür sind Plattenheizung, Heißluft, energiereiche Strahlung wie Mikrowelle oder Laser.

Der Katalysator wird entweder durch den Unterdruck alleine oder durch zusätzliches Erhitzen auf 30 °C bis 160 °C, bevorzugt auf 50 °C bis150 °C, weiter bevorzugt auf 80 °C bis 140 °C verdampft. In einer bevorzugten alternativen Ausführungsform wird der Katalysator ausschließlich erhitzt, ohne gleichzeitig Unterdruck anzulegen.

Das Aufheizen des Katalysators (vi) wird insbesondere limitiert durch dessen Zersetzungstemperatur. In bevorzugten Ausführungsformen liegt die Verdampfungstemperatur 10 °C unter der Zersetzungstemperatur, bevorzugt 20 °C, weiter bevorzugt 30 °C und besonders bevorzugt 50 °C unter der Zersetzungstemperatur des Katalysators (vi). Als Zersetzungstemperatur wird diejenige Temperatur bezeichnet, bei der in einer thermogravimetrischen Analyse, auch als TGA bezeichnet, mit 20°C/min der Gewichtsverlust 10% übersteigt. Thermogravimetrische Analyse, auch als TGF abgekürzt, meint dabei die Analyse nach DIN EN ISO 11358.

In weiter bevorzugten Ausführungsformen liegt die Temperatur des zweiten Katalysators (vi) beim Aufbringen weniger als 50 °C über der Vicattemperatur des Polyisocyanat Polyadditionsproduktes, bevorzugt weniger als 20 °C, weiter bevorzugt weniger als 10 °C, weiter bevorzugt nicht über der Vicattemperatur, noch weiter bevorzugt unter der Vicattemperatur, noch weiter bevorzugt mindestens 5 °C unter der Vicattemperatur und besonders bevorzugt mindestens 10 °C unter der Vicattemperatur des Polyisocyanat Polyadditonsproduktes.

Mit Vicattemperatur ist die Vicat-Erweichungstemperatur nach DIN EN ISO 306 gemeint.

In einer weiter bevorzugten Ausführungsform wird das Polyisocyanat Polyadditionsprodukt, bevorzugt als Granulat vorliegend, nach dem Auftrag des zweiten Katalysators (vi) bei einer Temperatur zwischen 10 °C und 150 °C, bevorzugt zwischen 50 °C und 120 °C gelagert. Dieser Vorgang wird auch als Temperung bezeichnet

In einem bevorzugten Verfahren beträgt die Temperung zwischen 0 Stunden und 72 Stunden, bevorzugt zwischen 1 Stunde und 24 Stunden.

Bevorzugt handelt es sich bei dem thermoplastische Polyisocyanat Polyadditionsprodukt um ein thermoplastisches Polyurethan. Das thermoplastische Polyurethan hat bevorzugt eine Shore A Härte zwischen 10 und 80, weiter bevorzugt zwischen 10 und 60, weiter bevorzugt zwischen 10 und 40 und besonders bevorzugt zwischen 10 und 30.

Ein weiterer Gegenstand der Erfindung ist Polyisocyanat Polyadditionsprodukt, das durch zusätzliches Aufbringen eines zweiten Katalysators, gemäß einer der zuvor beschriebenen Ausführungsformen hergestellt wurde, insbesondere auch ein auf diese Weise hergestelltes Granulat.

Alle bevorzugten Ausführungsformen sind in jeder denkbaren Kombination Bestandteil dieser Anmeldung, insbesondere zählen hierzu auch die in den Ansprüchen offenbarten Kombinationen.

Die folgenden Beispiele dienen der Illustration der Erfindung und sind In keiner Weise einschränkend zu interpretieren.

isocyanathaltige Rohstoffe und Polyisocyanat auf 80 °C erwärmt und in einem Mischkopf intensiv gemischt. Das erhaltene Reaktionsgemisch wurde mit einer Temperatur von 97 °C auf ein PTFE-Band aufgebracht und durch einen Tunnelofen gefördert. Die am Ende des Bandes zu einer Bandware erstarrte Reaktionsmischung wird über Einzugswalzen kontinuierlich einer Zerkleinerungs- und Homogenisiervorrichtung zugeführt. Dort wird es zerkleinert und in einen tangential angeflanschten Einwellenextruder gefördert. Die Gehäusetemperaturen liegen im Einzugsbereich bei 160 °C, in der Mittelzone bei 180 °C und in der Austragszone bei 220 °C. Nach dem Schmelzeabschlag durch Unterwassergranulierung und integrierter zentrifugaler Trocknung wurde das Granulat bei ca. 80 °C bis 90 °C endgetrocknet.

### Beispiel 1 a):

Ether-TPU Shore Härte 85A:
1000 Gew.-T. Polytetrahydrofuran
600 Gew.-T. 4,4'-Diphenylmethandiisocyanat
126 Gew.-T. 1,4-Butandiol

Produziert mit einer Anlage zur kontinuierlichen Herstellung von thermoplastischen Polyurethanelastomeren beschrieben z.B. in EP 0 922 552.

### Beispiel 1 b)

Ether-TPU Shore Härte 85A:
1000 Gew.-T. Polytetrahydrofuran
600 Gew.-T. 4,4'-Diphenylmethandiisocyanat
126 Gew.-T. 1,4-Butandiol

Produziert nach dem Reaktionsextruderverfahren beschrieben z.B. in Reactive Extrusion, M. Xanthos, Carl Hanser Verlag, München 1992.

### Beispiel 1 c)

Ether-TPU Shore Härte 90A:
1000 Gew.-T. Polytetrahydrofuran
700 Gew.-T. 4,4'-Diphenylmethandiisocyanat
162 Gew.-T. 1,4-Butandiol

Produziert nach dem Reaktionsextruderverfahren beschrieben z.B. in Reactive Extrusion, M. Xanthos, Carl Hanser Verlag, München 1992

### Beispiel 2:

In Beispiel 2 wurde Granulat gemäß Beispiel 1 mit dem Katalysator Zinndioctoat (SDO), gelöst in Aceton besprüht. Aufgrund der Viskosität des SDO ist der Katalysator mit Aceton soweit verdünnt worden, dass er versprüht werden konnte. Die Tabelle 1 zeigt die Versuchsergebnisse.

Der Gehalt an freien und über Allophanat und/oder Biuretbindungen gebundenen NCO-Gruppen vor der Besprühung betrug 0,16 Gewichts %. Eine Beschreibung zur Bestimmung dieses Rest-NCO-Gehaltes findet sich z.B. in Plaste und Kautschuk Heft 7/1980 Seite 374.

**Tabelle 1: Versuche katalysierte Temperung, Besprühung mit Lösungsmittel**

| Behandlung mit Katalysator | Lagerung | Rest-NCO [%] nach der Lagerung | Lösungsviskosität 20% Dimethylformamid und 1% N-Dibutylamin bei 23 °C [mPas] |
|---|---|---|---|
| Keine | 2 h 80 °C und 2 Tage Lagerung bei Raumtemperatur | 0,075 | 85 |
| 10% SDO in Aceton / Granulat besprüht; Zugabe von ca. 300 ppm Zinn *] | 2 h 80 °C und 2 Tage Lagerung bei Raumtemperatur | 0,064 | 95 |
| 10% SDO in Aceton / Granulat 1 s eingetaucht; Zugabe von ca. 800 ppm Zinn *) | 2 Tage Lagerung bei Raumtemperatur | 0,039 | 115 |

| | | | |
|---|---|---|---|
| *) Die Konzentrationsangabe des Zinns meint Zn(II) und bezieht sich auf die Gesamtgewichtsmenge des verwendeten Polyurethans. | | | |

Es hat sich überraschenderweise gezeigt, dass man auch bei geringen Rest-NCO-Konzentrationen durch aufbringen von Katalysator auf festes Granulat die Reaktion beschleunigen kann. Dies ist daher überraschend, da laut Literatur z.B. Plaste und Kautschuk Heft 3/1987 Seite 116, Kinetische Untersuchungen zur Bildung von linearen PUR-Elastomeren, die katalysierte Reaktion für Umsatzgrade größer als 90% nicht wirksam ist.

Im obigen Beispiel ist sogar durch die bloße Aufbringung des Katalysators bereits ohne Temperung ein höherer Reifegrad erreicht worden als durch nicht-katalysierte Temperung alleine, wovon aufgrund der zugrundeliegenden Reaktionstheorie nicht auszugehen war.

### Beispiel 3: Bedampfungsversuche

Ein bei 120-125 °C mit Zinndioctoat gesättigter Stickstoffstrom wurde durch eine Granulatschüttung geleitet (siehe auch Figur 1).

In Versuchen sind die Heizungstemperatur, der Stickstoffvolumenstrom und die Bedampfungszeit variiert worden. Zusätzlich zur Behandlung, angegeben in Tabelle 2, sind die Proben bis zur Analyse jeweils 15 h bei Raumtemperatur gelagert worden.

**Tabelle 2: Versuche katalysierte Temperung, Bedampfung**

| Produkt | Behandlung mit Katalysator | | | Temperung | Rest-NCO [%] nach der Lagerung | Lösungsviskosität 20% Dimethylformamid und 1% N-Dibutylamin bei 23 °C [mPas] |
|---|---|---|---|---|---|---|
| | Bedampfungszeit | SDO-Temp. | V° N2 | | | |
| gemäß Beispiel 1 b) | - | - | - | - | 0,115 | 113 |
| gemäß Beispiel 1 b) | 2 min | 120 °C | 0,3 m³/h | - | 0,102 | 117 |
| gemäß Beispiel 1 b) | 4 min | 120 °C | 0,3 m³/h | - | 0,100 | 124 |
| | | | | | | |
| gemäß Beispiel 1 c) | - | - | - | - | 0,131 | 88 |
| gemäß Beispiel 1 c) | - | - | - | 3 h 80 °C | 0,102 | 129 |
| gemäß Beispiel 1 c) | 4 min | 120 °C | 0,3 m³/h | 3 h 80 °C | 0,083 | 157 |
| | | | | | | |
| gemäß Beispiel 1 a) | - | - | - | 3 h 80 °C | 0,062 | 112 |
| gemäß Beispiel 1 a) | 10 min | 125 °C | 0,9 m³/h | 3 h 80 °C | 0,042 | 126 |

Aus der Tabelle 2 ist ersichtlich, dass auch bei diesen Versuchen mit der Bedampfungsmethode bis zu 0,02 Prozentpunkte weniger Rest-NCO-Gehalt nach dem Tempern erreicht wurden.

Es wurde ferner nachgewiesen, dass die zusätzliche Katalyse zu keiner Minderung der Extrusionsqualität führt.

## Patentansprüche

1. Verfahren zur Herstellung von thermoplastischem Polyisocyanat Polyadditionsprodukt, basierend auf Polyisocyanat (i) und mit Polyisocyanat reaktiven Verbindungen (ii),
gegebenenfalls unter Verwendung von Kettenverlängerer (iii), erstem Katalysator (iv) und/oder Hilfsstoffe und/oder Zusatzstoffen (v), die in einem ersten Schritt miteinander reagieren
**dadurch gekennzeichnet, dass**
in einem weiteren Schritt auf das so hergestellte Polyisocyanat Polyadditionsprodukt ein zweiter Katalysator (vi) aufgebracht wird, der die Reaktion zwischen dem Polyisocyanat (i) und den mit Polyisocyanat reaktiven Verbindungen (ii) beschleunigt
wobei der zweite Katalysator (vi) zunächst vernebelt und/oder verdampft wird und dann auf das Polyisocyanat Polyadditionsprodukt aufgebracht wird.

2. Verfahren gemäß Anspruch 1
**dadurch gekennzeichnet, dass**
es sich bei dem thermoplastischen Polyisocyanat Polyadditionsprodukt um thermoplastisches Polyurethan handelt, das bevorzugt eine Shore A Härte zwischen 10 und 80, weiter bevorzugt zwischen 10 und 60, weiter bevorzugt zwischen 10 und 40 und besonders bevorzugt zwischen 10 und 30 hat.

3. Verfahren gemäß Anspruch 1 oder 2, **dadurch gekennzeichnet, dass** das Polyisocyanat Polyadditionsprodukt als Granulat vorliegt.

4. Verfahren nach einem der vorhergehenden Ansprüche, **dadurch gekennzeichnet, dass** der Katalysator (vi) in einem ersten Raum zu einem Katalysatordampf verdampft und/oder zu einem Katalysatornebel vernebelt wird und anschließend in einem zweiten Raum auf das Polyisocyanat Polyadditionsprodukt aufgebracht wird.

5. Verfahren nach Anspruch 4, **dadurch gekennzeichnet, dass** der Katalysatordampf und/oder Katalysatornebel von dem ersten Raum in den zweiten Raum durch ein Trägergas übergeführt wird.

6. Verfahren nach Anspruch 5, **dadurch gekennzeichnet, dass** das Trägergas in dem ersten Raum einen Überdruck von 0,001 bar bis 10 bar, bevorzugt, 0,01 bar bis 5 bar und besonders bevorzugt von 0,02 bar bis 2 bar erzeugt und auf diese Weise, der Katalysatordampf und/oder Katalysatornebel in den zweiten Raum übergetrieben wird.

7. Verfahren nach einem der vorhergehenden Ansprüche, **dadurch gekennzeichnet, dass** der Katalysators (vi) in einem geschlossenen System verdampft und/oder vernebelt wird und dadurch auf das Polyisocyanat Polyadditionsprodukt aufgebracht wird.

8. Verfahren nach Anspruch 7, **dadurch gekennzeichnet, dass** in dem System ein Unterdruck vorliegt bei dem der Katalysator (vi) verdampft.

9. Verfahren nach einem der vorhergehenden Ansprüche,
**dadurch gekennzeichnet, dass**
der Katalysator (vi) beim Verdampfen auf maximal 10°C unter seine Zersetzungstemperatur erhitzt wird, bevorzugt auf maximal 20 °C, weiter bevorzugt auf maximal 30 °C und besonders bevorzugt auf maximal 50 °C unter seine Zersetzungstemperatur

10. Verfahren gemäß einem der vorhergehenden Ansprüche
**dadurch gekennzeichnet, dass**
die Temperatur beim Verdampfen des Katalysators zwischen 30 ° C und 160 °C, bevorzugt zwischen 50 °C und 150 °C und weiter bevorzugt zwischen 80 °C und 140 °C liegt.

11. Verfahren nach einem der vorhergehenden Ansprüche
**dadurch gekennzeichnet, dass**
die Temperatur des zweiten Katalysators (vi) beim Aufbringen weniger als 50 °C über der Vicattemperatur des Polyisocyanat Polyadditionsproduktes liegt, bevorzugt weniger als 20 °C, weiter bevorzugt weniger als 10°C, weiter bevorzugt unter der Vicattemperatur, noch weiter bevorzugt mindestens 5°C und besonders bevorzugt mindestens 10 °C unter der Vicattemperatur.

12. Verfahren gemäß mindestens der vorhergehenden Ansprüche, **dadurch gekennzeichnet, dass**
das Polyisocyanat Polyadditionsprodukt nach dem Auftrag des zweiten Katalysators bei einer Temperatur zwischen 10 und 150 °C, bevorzugt zwischen 50 -120°C getempert wird.

13. Thermoplastisches Polyisocyanat Polyadditionsprodukt, hergestellt nach einem der Verfahren gemäß Anspruch 1 bis 12.

## Claims

1. A process for preparing a thermoplastic polyisocyanate polyaddition product based on polyisocyanate (i) and compounds (ii) which are reactive toward polyisocyanate, optionally with the use of chain extender (iii), a first catalyst (iv) and/or auxiliaries and/or additives (v), which react with one another in a first step, wherein, in a second step, a second catalyst (vi) which accelerates the reaction between the polyisocyanate (i) and the compounds (ii) which are reactive toward polyisocyanate is applied to the polyisocyanate polyaddition product prepared in this way, where the second catalyst (vi) is initially converted into a mist and/or vaporized and is then applied to the polyisocyanate polyaddition product.

2. The process according to claim 1, wherein the thermoplastic polyisocyanate polyaddition product is thermoplastic polyurethane which preferably has a Shore A hardness in the range from 10 to 80, more preferably from 10 to 60, more preferably from 10 to 40 and particularly preferably from 10 to 30.

3. The process according to claim 1 or 2, wherein the polyisocyanate polyaddition product is present as pellets.

4. The process according to any of the preceding claims, wherein the catalyst (vi) is vaporized and/or atomized to form a catalyst mist in a first space and is subsequently applied to the polyisocyanate polyaddition product in a second space.

5. The process according to claim 4, wherein the catalyst vapor and/or catalyst mist is transferred from the first space into the second space by means of a carrier gas.

6. The process according to claim 5, wherein the carrier gas generates a superatmospheric pressure of from 0.001 bar to 10 bar, preferably from 0.01 bar to 5 bar and particularly preferably from 0.02 bar to 2 bar, in the first space and the catalyst vapor and/or catalyst mist is in this way driven over into the second space.

7. The process according to any of the preceding claims, wherein the catalyst (vi) is vaporized and/or atomized in a closed system and is thereby applied to the polyisocyanate polyaddition product.

8. The process according to claim 7, **characterized in that** a subatmospheric pressure at which the catalyst (vi) vaporizes prevails in the system.

9. The process according to any of the preceding claims, wherein the catalyst (vi) is heated to not more than 10°C below its decomposition temperature during vaporization, preferably to not more than 20°C below, more preferably to not more than 30°C below and particularly preferably to not more than 50°C below, its decomposition temperature.

10. The process according to any of the preceding claims, wherein the temperature during vaporization of the catalyst is in the range from 30°C to 160°C, preferably from 50°C to 150°C and more preferably from 80°C to 140°C.

11. The process according to any of the preceding claims, wherein the temperature of the second catalyst (vi) during application is less than 50°C above the Vicat temperature of the polyisocyanate polyaddition product, preferably less than 20°C above, more preferably less than 10°C above, more preferably below, the Vicat temperature, even more preferably at least 5°C and particularly preferably at least 10°C below the Vicat temperature.

12. The process according to at least one of the preceding claims, wherein the polyisocyanate polyaddition product is heat-treated at a temperature in the range from 10 to 150°C, preferably 50-120°C, after application of the second catalyst.

13. A thermoplastic polyisocyanate polyaddition product prepared by a process according to any of claims 1 to 12.

## Revendications

1. Procédé pour la préparation d'un produit thermoplastique de polyaddition de polyisocyanate, à base de polyisocyanate (i) et de composés (ii) réactifs avec polyisocyanate, le cas échéant en utilisant des agents d'allongement de chaîne (iii), un premier catalyseur (iv) et/ou des adjuvants et/ou des additifs (v), qui réagissent dans une première étape les uns avec les autres, **caractérisé en ce qu'**on applique dans une autre étape, sur le produit de polyaddition de polyisocyanate ainsi préparé, un deuxième catalyseur (vi) qui accélère la réaction entre le polyisocyanate (i) et les composés réactifs avec polyisocyanate (ii) le deuxième catalyseur (vi) étant d'abord nébulisé et/ou évaporé puis appliqué sur le produit de polyaddition de polyisocyanate.

2. Procédé selon la revendication 1, **caractérisé en ce qu'**il s'agit, pour le produit thermoplastique de polyaddition de polyisocyanate, de polyuréthane thermoplastique qui présente de préférence une dureté Shore A entre 10 et 80, plus préférablement entre 10 et 60, encore plus préférablement entre 10 et 40 et de manière particulièrement préférée entre 10 et 30.

3. Procédé selon la revendication 1 ou 2, **caractérisé en ce que** le produit de polyaddition de polyisocyanate se trouve sous forme de granulat.

4. Procédé selon l'une quelconque des revendications précédentes, **caractérisé en ce que** le catalyseur (vi) est évaporé en une vapeur de catalyseur et/ou nébulisé en un brouillard de catalyseur dans une première chambre et ensuite appliqué dans une deuxième chambre sur le produit de polyaddition de polyisocyanate.

5. Procédé selon la revendication 4, **caractérisé en ce que** la vapeur et/ou de brouillard de catalyseur est transporté de la première chambre dans la deuxième chambre par un gaz support.

6. Procédé selon la revendication 5, **caractérisé en ce que** le gaz support génère, dans la première chambre, une surpression de 0,001 bar à 10 bars, de préférence de 0,01 bar à 5 bars et de manière particulièrement préférée de 0,02 bar à 2 bars et la vapeur et/ou le brouillard de catalyseur est ainsi transféré(e) dans la deuxième chambre.

7. Procédé selon l'une quelconque des revendications précédentes, **caractérisé en ce que** le catalyseur (vi) est évaporé et/ou nébulisé dans un système fermé et appliqué, de ce fait, sur le produit de polyaddition de polyisocyanate.

8. Procédé selon la revendication 7, **caractérisé en ce qu'**il existe dans le système une dépression à laquelle le catalyseur (vi) s'évapore.

9. Procédé selon l'une quelconque des revendications précédentes, **caractérisé en ce que** le catalyseur (vi) est chauffé lors de l'évaporation à au maximum 10°C sous sa température de décomposition, de préférence à au maximum 20°C, plus préférablement à au maximum 30°C et de manière particulièrement préférée à au maximum 50°C sous sa température de décomposition.

10. Procédé selon l'une quelconque des revendications précédentes, **caractérisé en ce que** la température lors de l'évaporation du catalyseur est située entre 30 et 160°C, de préférence entre 50 et 160°C et plus préférablement entre 80 et 140°C.

11. Procédé selon l'une quelconque des revendications précédentes, **caractérisé en ce que** la température du deuxième catalyseur (vi) se situe, lors de l'application, à moins de 50°C au-dessus de la température de Vicat du produit de polyaddition de polyisocyanate, de préférence à moins de 20°C, plus préférablement à moins de 10°C, encore plus préférablement sous la température de Vicat, encore plus préférablement à au moins 5°C et de manière particulièrement préférée à au moins 10°C sous la température de Vicat.

12. Procédé selon au moins l'une quelconque des revendications précédentes, **caractérisé en ce que** le produit de polyaddition de polyisocyanate est équilibré thermiquement après l'application du deuxième catalyseur à une température entre 10 et 150°C, de préférence entre 50-120°C.

13. Produit thermoplastique de polyaddition de polyisocyanate, préparé selon l'un des procédés selon les revendications 1 à 12.
